# EUROPÄISCHE PATENTSCHRIFT

(11) **EP 2 681 986 B1**
(45) Veröffentlichungstag und Bekanntmachung des Hinweises auf die Patenterteilung: **16.08.2017**
(21) Anmeldenummer: 13162704.4
(22) Anmeldetag: 08.04.2013
(51) Int. Cl.: A01F 12/10

(54) **Mähdrescher**
Combine harvester
Moissonneuse-batteuse

(30) Priorität: 03.07.2012 DE 102012105880
(43) Veröffentlichungstag der Anmeldung: 08.01.2014
(73) Patentinhaber: CLAAS Selbstfahrende Erntemaschinen GmbH, 33428 Harsewinkel (DE)
(72) Erfinder: Esken, Dirk, 59494 Soest-Meckingsen (DE); Holtmann, Bernd, 48324 Sendenhorst (DE); Niermann, Martin, 33428 Harsewinkel (DE)

(56) Entgegenhaltungen:
- EP-A1- 0 312 430
- WO-A1-2010/086063
- DE-A1- 19 733 655

## Beschreibung

Die vorliegende Erfindung betrifft einen Mähdrescher gemäß dem Oberbegriff des Anspruches 1.

Aus der WO 2010/086063 A1 ist ein Mähdrescher der eingangs genannten Art bekannt, der eine Axialabscheidevorrichtung mit zwei Abscheiderotoren aufweist, die sich in Längsrichtung des Mähdreschers erstrecken. Der Abscheidevorrichtung ist eine zu dieser quer verlaufende Drescheinrichtung sowie eine Fördertrommel vorgelagert, die den von der Drescheinrichtung abgegebenen Erntegutstrom für die Zuführung an die Axialabscheidevorrichtung kanalisiert. Die Fördertrommel weist auf ihrer Mantelfläche achsparallel angeordnete Leitbleche auf, die der Förderung des Erntegutes dienen. Die Leitbleche weisen auf der Seite, die nicht unmittelbar der Förderung des Erntegutes dient, Stützelemente auf, die sich abschnittsweise in Umfangsrichtung der Mantelfläche erstrecken, welche die auf die Leitbleche einwirkenden Kräfte bei der Erntegutförderung aufnehmen und auf der Mantelfläche abstützen sollen. Die Stützelemente sind durch Schweißverbindungen mit den Leitblechen sowie der Mantelfläche verbunden

Als nachteilig an dieser Anordnung erweist sich, dass bei den auftretenden dynamisch wechselnden Belastungen durch geringfügige Schwankungen im Erntegutstrom während der Förderung des Erntegutes von der Drescheinrichtung zur Axialabscheideinrichtung Risse im Bereich der Schweißnähte auftreten beziehungsweise sich die Stützelemente mit ihrem dem jeweiligen Leitblech abgewandten Ende in die Mantelfläche der Fördertrommel eindrücken. Diese Beschädigungen resultieren daher, dass die von den Stützelementen aufgenommenen Kräfte an ihrem freien Ende entsprechend ihrer keilförmigen Geometrie unter einem spitzen Winkel in die Mantelfläche eingeleitet werden. Derartige Schäden erfordern den Austausch der beschädigten Fördertrommel, um einen sicheren Gutfluss gewährleisten zu können. Darüber hinaus können derartige Beschädigungen an der Fördertrommel dazu führen, dass sich die Stützelemente von der Fördertrommel lösen und in das Innere des Mähdreschers gelangen können, was mit Beschädigungen der der Fördertrommel nachgeordneten Arbeitsorgane einher geht.

Aufgabe der vorliegenden Erfindung ist es, einen Mähdrescher der eingangs genannten Art derart weiterzubilden, dass die Nachteile des Standes der Technik auf einfache und kostengünstige Art und Weise vermieden werden können.

Diese Aufgabe wird erfindungsgemäß durch die kennzeichnenden Merkmale des Anspruches 1 gelöst.

Vorteilhafte Weiterbildungen der Erfindung sind Gegenstand der Unteransprüche.

Gemäß dem Anspruch 1 wird vorgeschlagen, dass sich die Stützelemente in radialer Richtung über die gesamte freie Mantelfläche der Fördertrommel zwischen den jeweils benachbarten Leitblechen erstrecken. Dadurch, dass sich die Stützelemente über die freie Mantelfläche von Leitblech zu Leitblech erstrecken, werden die Kräfte im Wesentlichen tangential in die Mantelfläche eingeleitet beziehungsweise stützen sich die Kräfte in Umfangsrichtung auf dieser ab. Auf diese Weise lassen sich die dynamisch wechselnden Belastungen, die auf die Leitbleche bei der Erntegutförderung einwirken, besser abfangen und Beschädigungen vermeiden. Gegenüber einer Erhöhung der Mantelstärke des Grundkörpers der Fördertrommel weist diese Lösung Vorteile hinsichtlich des Gewichts der Fördertrommel wie auch der Materialkosten auf.

Vorzugsweise sollte die radiale Erstreckung der Stützelemente ausgehend von der Seite eines Leitbleches, die nicht unmittelbar der Förderung des Erntegutes dient, in Umfangsrichtung der Fördertrommel abnehmen. Auf diese Weise ist sichergestellt, dass sich das Erntegut zwischen den benachbarten Leitblechen der Mantelfläche annähert, um mit diesen in Kontakt zu kommen und nicht über diese hinweg gefördert zu werden.

Des Weiteren kann die der Mantelfläche abgewandte Oberkante der Stützelemente einen im Wesentlichen tangentialen Verlauf aufweisen. Hierdurch wird der Effekt, dass sich die von den Stützelementen aufgenommenen Kräfte in Umfangsrichtung der Fördertrommel abstützen, begünstigt. Die Einleitung der von dem Stützelement aufgenommenen Kräfte in die Mantelfläche erfolgt, im Gegensatz zum Stand der Technik, unter einem im Wesentlichen stumpfen Winkel. Das heißt, dass der Anteil der horizontalen Komponente der Resultierenden, die in Umfangsrichtung wirkt, größer ist als der Anteil der horizontalen Komponente, die in radialer Richtung auf die Mantelfläche einwirkt.

Vorteilhafterweise können die Stützelemente in Umfangsrichtung der Fördertrommel fluchtend angeordnet sein. Durch die ringförmige Anordnung wird eine bessere Aufnahme der in Umfangsrichtung von den Stützelementen aufgenommenen Kräfte erreicht. Die Stützelemente stützen sich somit nicht nur an dem nachfolgenden Leitblech ab, sondern zusätzlich an dem sich daran anschließenden Stützelement.

Insbesondere kann zwischen den benachbarten Leitblechen mindestens ein Stützelement angeordnet sein. Die Anzahl der Stützelemente, die zwischen zwei benachbarten Leitblechen angeordnet sind, orientiert sich an der zu erwartenden Belastung beziehungsweise Dimensionierung der Fördertrommel.

Vorzugsweise kann die Abscheidevorrichtung des Mähdreschers als eine Axialabscheidevorrichtung mit mindestens einem Trennrotor ausgeführt sein.

Weiterhin kann die Abscheidevorrichtung des Mähdreschers als ein Hordenschüttler ausgeführt sein.

Die vorliegende Erfindung wird nachfolgend anhand eines in den Zeichnungen dargestellten Ausführungsbeispieles näher erläutert.

Es zeigen:
- Fig. 1: eine schematische Darstellung eines Mähdreschers;
- Fig. 2: eine perspektivische Ansicht einer Fördertrommel;
- Fig. 3: eine Seitenansicht der Fördertrommel gemäß Fig. 2;
- Fig. 4: eine perspektivische Ansicht einer zweiten Ausführungsform einer Fördertrommel.

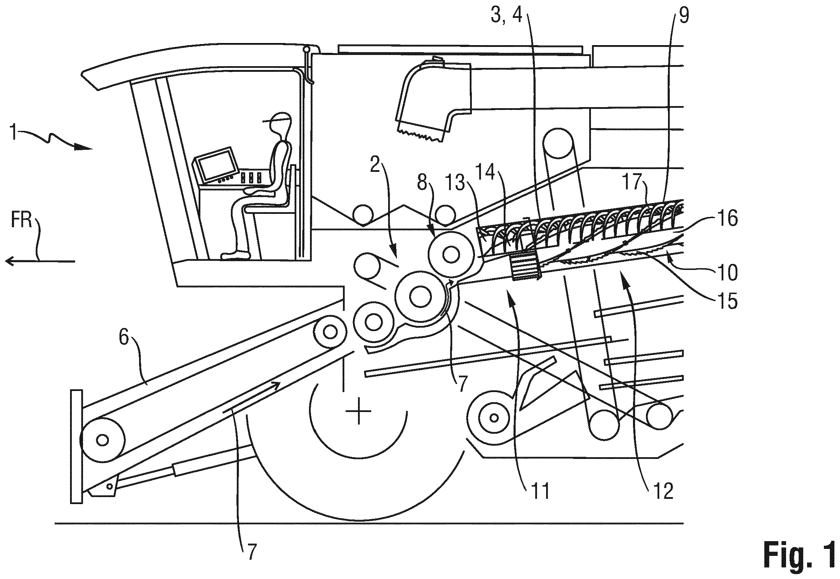

Bei dem in Fig. 1 gezeigten Ausführungsbeispiel der Erfindung handelt es sich um einen selbstfahrenden Mähdrescher 1, der mit einem Tangentialdreschwerk 2 und einer dem Tangentialdreschwerk 2 nachgeordneten Axialabscheidevorrichtung 3 als Trennvorrichtung 4 ausgerüstet ist. Das Erntegut wird von einem Schneidwerk (nicht dargestellt) aufgenommen, welches das Erntegut dem Schrägförderer 6 zuführt. Der Schrägförderer 6 übergibt das Erntegut an das Tangentialdreschwerk 2, welches das Erntegut mechanisch bearbeitet. Von dem Tangentialdreschwerk 2 gelangt ein im Wesentlichen von ausgedroschenen Halmen gebildeter Gutstrom 7 über eine Fördertrommel 8 in die Axialabscheidevorrichtung 3. Der Axialabscheidevorrichtung 3 besteht aus zwei parallel in Fahrtrichtung FR des Mähdreschers 1 hintereinander liegenden bereichsweise als Sieb- oder Lochfläche ausgebildeten Rotorgehäusen 9, in denen jeweils ein rotierend angetriebener Trennrotor 10 angeordnet ist, wobei der Axialabscheider 4 einen Einzugsbereich 11 und einen nachgeordneten Abscheidebereich 12 aufweist.

Im Einzugsbereich 11 ist jeder Trennrotor 10 als mit Förderschneckenabschnitten 13 bestückter Kegelstumpf 14 und im Abscheidebereich 12 als mit beispielsweise Förderelementen 15 besetztes zylinderförmiges Kernrohr 16 ausgebildet, wobei der große Durchmesser des Kegelstumpfes 14 dem Durchmesser des Kernrohrs 16 entspricht. Die Förderelemente 15 transportieren im Zusammenwirken mit innerhalb des Abscheidebereiches 12 im Rotorgehäuse 9 angebrachten Führungsleisten 17 den Gutstrom 7 in den rückwärtigen Bereich des Mähdreschers 1, wobei insbesondere die noch im Gutstrom 7 enthaltenen Körner, sowie eventuell Kurzstroh und Spreu abgetrennt und abgeschieden werden.

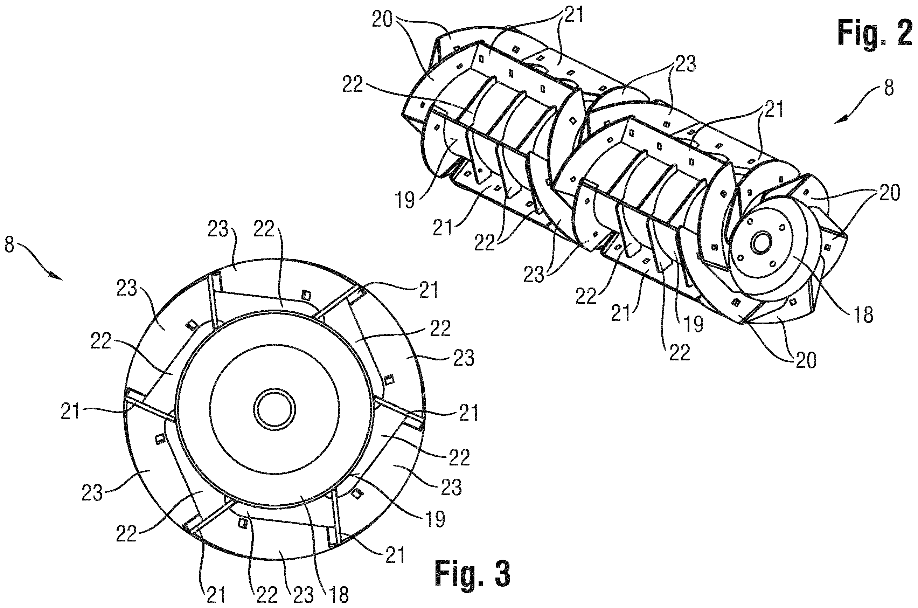

In Fig. 2 ist eine perspektivische Ansicht der Fördertrommel 8 dargestellt. Die Fördertrommel 8 besteht aus einem hohlzylindrischen Grundkörper 18 mit einem kreisförmigen Querschnitt. Der Grundkörper 18 weist eine zumindest in radialer Richtung durchgehende Mantelfläche 19 auf. An den jeweiligen Außenseiten der Fördertrommel 8 sind sich in radialer Richtung erstreckende Erntegutleitelemente 20 angeordnet, die eine nach innen geneigte, zur Mitte der Fördertrommel 8 weisende Anordnung aufweisen. Die Erntegutleitelemente 20 lenken das von dem Tangentialdreschwerk 2 abgegebene Erntegut nach innen ab. In der Mitte der Fördertrommel 8 sind weitere Erntegutleitelemente 20 paarweise angeordnet, die jeweils eine nach außen geneigte Anordnung aufweisen. Die in der Mitte der Fördertrommel 8 befindlichen Erntegutleitelemente 20 sind im Wesentlichen keilförmig angeordnet, um den Erntegutstrom in diesem Bereich aufzuteilen, damit eine gleichmäßige Abgabe an die Axialabscheidevorrichtung 3 erreicht wird. Der Aufbau der Fördertrommel 8 ist beiderseits der mittleren Erntegutleitelemente 20 symmetrisch ausgeführt. Zwischen den außenseitig und innenseitig angeordneten Erntegutleitelementen 20 befinden sich Leitbleche 21 die achsparallel zur Längsachse der Fördertrommel 8 angeordnet sind. Die Leitbleche 21 erstrecken sich in radialer Richtung nach außen und weisen eine geringfügige Neigung in Umfangsrichtung der Fördertrommel 8 auf. Über den Umfang der Fördertrommel 8 sind mehrere Leitbleche 21 gleichmäßig verteilt angeordnet. Zwischen jeweils benachbarten Leitblechen 21 sind ein oder mehrere Stützelemente 22 angeordnet, die durch eine Schweißverbindung mit den Leitblechen 21 verbunden sind. Das jeweilige Stützelement 22 erstreckt sich in Umfangsrichtung über die gesamt freie Mantelfläche 19 zwischen den benachbarten Leitblechen21.

Die Darstellung in Fig. 3 zeigt eine Seitenansicht der Fördertrommel 8, bei welcher die stirnseitigen Erntegutleitelementen 20 auf einer Seite gemäß Fig. 2 nicht dargestellt sind. Die Stützelemente 22 erstrecken sich ausgehend von der Rückseite des Leitbleches 21, welche nicht unmittelbar der Förderung des Erntegutes dient, in Umfangsrichtung der Fördertrommel 8 bis zu der Vorderseite des nachfolgenden Leitbleches 21, welche unmittelbar der Förderung des Erntegutes dient. Dabei nimmt die radiale Erstreckung der Stützelemente 21 ausgehend von der Rückseite des Leitbleches 21 bis zum Erreichen des nachfolgenden Leitbleches 21 in Umfangsrichtung ab. Die der Mantelfläche 19 abgewandte Oberkante der Stützelemente 22 weist einen im Wesentlichen tangentialen Verlauf auf. Wie aus der Darstellung in Fig. 2 und 3 ersichtlich ist, sind die Stützelemente 22 in Umfangsrichtung der Fördertrommel 8 fluchtend angeordnet. Hierdurch ergibt sich eine im Wesentlichen ringförmige Anordnung der Stützelemente 22, die für die Ableitung der aufgenommenen Kräfte vorteilhaft ist. Eine hiervon abweichende, in axialer Richtung der Fördertrommel 8 zueinander versetzte Anordnung ist ebenfalls möglich. In dem dargestellten Ausführungsbeispiel gemäß Fig. 2 sind mehrere Stützelemente 22 zwischen zwei benachbarten Leitblechen 21 angeordnet. In Abhängigkeit von der erwarteten auftretenden Belastung der Fördertrommel 8 kann die Anzahl der Stützelemente 22 zwischen zwei Leitblechen 21 sowie in Umfangsrichtung gesehen variieren. Es ist jedoch zumindest ein Stützelement 22 zwischen zwei benachbarten Leitblechen 21 angeordnet.

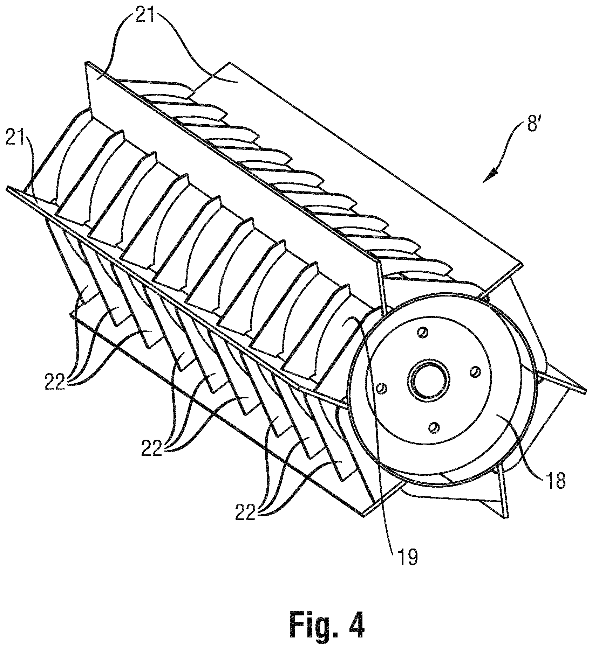

Die Darstellung in den Fig. 4 zeigt eine zweite Ausführungsform einer Fördertrommel 8', die ebenfalls an einem Mähdrescher vorgesehen, wobei dessen Abscheidevorrichtung 3 als ein Hordenschüttler mit mehreren Schüttlerstufen ausgeführt ist, dem die Fördertrommel 8' als so genannte Wendetrommel vorangestellt ist. Die Fördertrommel 8' unterscheidet sich von der eines Mähdreschers mit einer Axialabscheidevorrichtung im Wesentlichen dadurch, dass diese keine stirnseitig und mittig angeordneten Erntegutleitelemente aufweist. Im Übrigen entspricht der Aufbau der Fördertrommel 8' weitestgehend dem der Fördertrommel 8 eines Mähdreschers 1 mit Axialabscheidevorrichtung 4. Für mit der Fördertrommel 8 gemäß den Fig. 2 und 3 identische Bauteile wurden die in Fig. 4 verwendeten Bezugszeichen beibehalten.

### Bezugszeichenliste

- **1**: Mähdrescher
- **2**: Tangentialdreschwerk
- **3**: Axialabscheidevorrichtung
- **4**: Trennvorrichtung
- **6**: Schrägförderer
- **7**: Gutstrom
- **8**: Fördertrommel
- **8'**: Fördertrommel
- **9**: Rotorgehäuse
- **10**: Trennrotor
- **11**: Einzugsbereich
- **12**: Abscheidebereich
- **13**: Förderschneckenabschnitt
- **14**: Kegelstumpf
- **15**: Förderelemente
- **16**: Kernrohr
- **17**: Führungsleiste
- **FR**: Fahrtrichtung
- **18**: Grundkörper
- **19**: Mantelfläche
- **20**: Äußeres Erntegutleitelement
- **21**: Leitblech
- **22**: Stützelement
- **23**: Inneres Erntegutleitelement

## Patentansprüche

1. Mähdrescher (1) mit einer sich in Längsrichtung des Mähdreschers (1) erstreckenden Abscheidevorrichtung (3), der eine tangential angeordnete Fördertrommel (8, 8') vorangestellt ist, welche auf ihrem Umfang zueinander beabstandete, im Wesentlichen achsparallel angeordnete Leitbleche (21) aufweist, welche sich über sich in Umfangsrichtung zwischen jeweils benachbarten Leitblechen erstreckend angeordnete Stützelemente (22) auf der Mantelfläche (19) der Fördertrommel (8, 8') abstützen,
**dadurch gekennzeichnet,**
**dass** sich die Stützelemente (22) in radialer Richtung über die gesamte freie Mantelfläche (19) der Fördertrommel (8, 8') zwischen den benachbarten Leitblechen (21) erstrecken.

2. Mähdrescher (1) nach Anspruch 1, **dadurch gekennzeichnet, dass** die radiale Erstreckung des Stützelementes (22) ausgehend von der Rückseite eines Leitbleches(21), die nicht unmittelbar der Förderung des Erntegutes dient, in Umfangsrichtung der Fördertrommel (8, 8') abnimmt.

3. Mähdrescher (1) nach einem der Ansprüche 1 oder 2, **dadurch gekennzeichnet, dass** die der Mantelfläche (19) abgewandte Oberkante des Stützelementes (22) einen im Wesentlichen tangentialen Verlauf aufweist.

4. Mähdrescher (1) nach einem der Ansprüche 1 bis 3, **dadurch gekennzeichnet, dass** die Stützelemente (22) in Umfangsrichtung der Fördertrommel (8, 8') fluchtend angeordnet sind.

5. Mähdrescher (1) nach einem der Ansprüche 1 bis 4, **dadurch gekennzeichnet, dass** zwischen den benachbarten Leitblechen (21) mindestens ein Stützelement (22) angeordnet ist.

6. Mähdrescher nach einem der Ansprüche 1 bis 5, **dadurch gekennzeichnet, dass** die Abscheidevorrichtung (3) als eine Axialabscheidevorrichtung mit mindestens einem Trennrotor (10) ausgeführt ist.

7. Mähdrescher nach einem der Ansprüche 1 bis 5, **dadurch gekennzeichnet, dass** die Abscheidevorrichtung (3) als ein Hordenschüttler ausgeführt ist.

## Claims

1. A combine harvester (1) comprising a separating device (3) which extends in the longitudinal direction of the combine harvester (1) and which has upstream thereof a tangentially disposed conveyor drum (8, 8') which has mutually circumferentially spaced guide plates (21) which are arranged in substantially axis-parallel relationship and which are supported on the peripheral surface (19) of the conveyor drum (8, 8') by way of support elements (22) arranged to extend circumferentially between respectively adjacent guide plates (21),
**characterised in that** the support elements (22) extend in the radial direction over the entire free peripheral surface (19) of the conveyor drum (8, 8') between the adjacent guide plates (21).

2. A combine harvester (1) according to claim 1 **characterised in that** the radial extent of the support element (22) decreases in the circumferential direction of the conveyor drum (8, 8') starting from the rear side of a guide plate (21) which does not serve directly to convey the crop flow.

3. A combine harvester (1) according to one of claims 1 and 2 **characterised in that** the top edge of the support element (22), that faces away from the peripheral surface (19), is of a substantially tangential configuration.

4. A combine harvester (1) according to one of claims 1 to 3 **characterised in that** the support elements (22) are arranged in alignment in the circumferential direction of the conveyor drum (8, 8').

5. A combine harvester (1) according to one of claims 1 to 4 **characterised in that** at least one support element (22) is disposed between the adjacent guide plates (21).

6. A combine harvester according to one of claims 1 to 5 **characterised in that** the separating device (3) is in the form of an axial separating device having at least one separating rotor (10).

7. A combine harvester according to one of claims 1 to 5 **characterised in that** the separating device (3) is in the form of a straw walker.

## Revendications

1. Moissonneuse-batteuse (1) comprenant un dispositif séparateur (3) qui s'étend dans la direction longitudinale de la moissonneuse-batteuse (1) et qui est précédé par un tambour de convoyage (8, 8') disposé tangentiellement, lequel comporte sur sa périphérie des tôles déflectrices (21) qui sont distantes les unes des autres et disposées de manière parallèle axialement et qui prennent appui sur la surface latérale (19) du tambour de convoyage (8, 8') par l'intermédiaire d'éléments d'appui (22) disposés de manière à s'étendre dans la direction circonférentielle entre des tôles déflectrices respectivement voisines, **caractérisée en ce que** les éléments d'appui (22) s'étendent dans la direction radiale sur toute la surface latérale libre (19) du tambour de convoyage (8, 8') entre les tôles déflectrices voisines (21).

2. Moissonneuse-batteuse (1) selon la revendication 1, **caractérisée en ce que** l'extension radiale de l'élément d'appui (22) diminue dans la direction circonférentielle du tambour de convoyage (8, 8') à partir du côté arrière d'une tôle déflectrice (21) qui ne sert pas directement au convoyage du produit récolté.

3. Moissonneuse-batteuse (1) selon une des revendications 1 ou 2, **caractérisée en ce que** le bord supérieur de l'élément d'appui (22) disposé à l'opposé de la surface latérale (19) présente un tracé sensiblement tangentiel.

4. Moissonneuse-batteuse (1) selon une des revendications 1 à 3, **caractérisée en ce que** les éléments d'appui (22) sont disposés dans la direction circonférentielle du tambour de convoyage (8, 8') de manière à épouser celui-ci.

5. Moissonneuse-batteuse (1) selon une des revendications 1 à 4, **caractérisée en ce qu'**entre les tôles déflectrices voisines (21) est disposé au moins un élément d'appui (22).

6. Moissonneuse-batteuse selon une des revendications 1 à 5, **caractérisée en ce que** le dispositif séparateur (3) est conformé en un dispositif séparateur axial avec au moins un rotor de séparation (10).

7. Moissonneuse-batteuse selon une des revendications 1 à 5, **caractérisée en ce que** le dispositif séparateur (3) est conformé en secoueur à éléments multiples.
